# EUROPÄISCHE PATENTSCHRIFT

(11) **EP 2 597 328 B1**
(45) Veröffentlichungstag und Bekanntmachung des Hinweises auf die Patenterteilung: **22.03.2017**
(21) Anmeldenummer: 12193590.2
(22) Anmeldetag: 21.11.2012
(51) Int. Cl.: F16D 25/06

(54) **Kupplungsanordnung für einen Fahrzeugantriebsstrang**
Coupling assembly for a motor vehicle drive train
Agencement d'embrayage pour un conducteur de commande de véhicule

(30) Priorität: 23.11.2011 DE 102011119573
(43) Veröffentlichungstag der Anmeldung: 29.05.2013
(73) Patentinhaber: GETRAG Getriebe- und Zahnradfabrik Hermann Hagenmeyer GmbH & Cie KG, 74199 Untergruppenbach (DE)
(72) Erfinder: Hoffmann, Werner, 53721 Siegburg (DE); Oberhausen, Bernd, 41812 Erkelenz (DE)
(74) Vertreter: Witte, Weller & Partner Patentanwälte mbB

(56) Entgegenhaltungen:
- EP-A1- 0 718 517
- WO-A1-2009/145616
- US-A1- 2008 214 355
- US-B1- 6 374 976

## Beschreibung

Die vorliegende Erfindung betrifft eine Kupplungsanordnung, insbesondere für einen Fahrzeugantriebsstrang, mit einem Drehglied, das an einem Gehäuse um eine Längsachse drehbar lagerbar ist und das einen Hohlraum definiert, einer Kupplung, die ein erstes Kupplungsglied und ein damit kuppelbares zweites Kupplungsglied aufweist und die in dem Hohlraum angeordnet ist, wobei das erste Kupplungsglied oder das zweite Kupplungsglied mit dem Drehglied gekoppelt ist, und mit einer fluidischen Aktuatoranordnung, die ein erstes und ein zweites Aktuatorglied aufweist, die zum Betätigen der Kupplung relativ zueinander beweglich sind.

Derartige Kupplungsanordnungen werden beispielsweise in Fahrzeugantriebssträngen als Anfahrkupplungen verwendet, die zwischen einem Verbrennungsmotor und einem Drehzahlübersetzungsgetriebe angeordnet sind. Ferner finden derartige Kupplungsanordnungen Verwendung als Sperrkupplungen. Dies können beispielsweise sogenannte "Hang-On-Kupplungen" sein, die zur Einrichtung eines Vierradantriebes bei Bedarf eine zweite angetriebene Achse mit einer Kardanwelle oder dergleichen verbinden. Solche Sperrkupplungen können jedoch auch als Quer-Sperrkupplungen Einsatz finden, wobei beispielsweise eine rechte und eine linke Antriebswelle einer angetriebenen Achse miteinander verbindbar sind, um auf diese Weise eine Quersperrfunktion einzurichten. Ferner können solche Sperrkupplungen in Twin-Kupplungsanordnungen Verwendung finden, die einen Ausgang einer Antriebseinheit ohne mechanisches Differential mit einer linken bzw. einer rechten Antriebswelle einer angetriebenen Achse verbinden.

Bei derartigen Sperrkupplungen sind sogenannte passive Sperrkupplungen bekannt, bei denen sich aufgrund eines Drehzahl- oder eines Drehmomentunterschiedes zwischen den Rädern oder den Achsen ein nicht beeinflussbares Sperrmoment einstellt. Hierbei zählt zu den drehzahlfühlenden Systemen die sogenannte Viscokupplung. Sogenannte Torsen-Differentiale arbeiten hingegen drehmomentfühlend.

Ferner sind sogenannte aktive Sperren bekannt, die sich einfacher in elektronische Antriebsregelsysteme wie ABS oder ESP integrieren lassen. Aktive Sperren können unabhängig von Differenzdrehzahlen zu jeder Zeit zu- oder abgeschaltet werden, wodurch Störmomente passiver Sperrensysteme unterbunden werden, die die elektronischen Regelsysteme stören könnten. Bei den aktiven Sperrkupplungen kommen in der Regel Reibkupplungen zum Einsatz. Aufgrund der guten Dosierbarkeit und des guten Verschleißverhaltens können diese Reibkupplungen als nasse Lamellenkupplungen ausgeführt sein.

Bei den Quer-Sperrkupplungen kann ein Drehzahlausgleich aufgrund eines mechanischen Differentials einer angetriebenen Achse gehemmt werden. Der Vorteil solcher Quer-Sperrkupplungen ist es, dass diese auch in nur mit einer Achse angetriebenen Fahrzeugen Verwendung finden können, wobei Eigenschaften erreicht werden können, die nahe an denen eines sportlichen Allradantriebes liegen. Solche Quer-Sperrkupplungen können beispielsweise als Zusatzkupplungen von außen an ein Getriebegehäuse angeflanscht und über eine Steckverzahnung drehfest mit einem Differentialkorb verbunden werden. Es ist jedoch auch bekannt, solche Quer-Sperrkupplungen in das Getriebe zu integrieren, um Bauraum, Gewicht und Montagekosten einzusparen.

Zur Betätigung solcher Kupplungsanordnungen ist es bekannt, in einem Gehäuse einen hydraulischen Druckkolben vorzusehen, der bei Druckbeaufschlagung über eine Anordnung aus einem Axiallager und einer Druckscheibe auf die Kupplungsglieder (beispielsweise Lamellenpaket) drückt. Bei diesen Anordnungen bildet die Kupplungsanordnung kein in sich geschlossenes System, was das Handling bei der Integration aufwändig macht und Änderungen am Getriebegehäuse bedingt. Dies wiederum hat höhere Produktionskosten zur Folge.

Ferner sind Konzepte bekannt, die auf einen rotierenden Druckkolben setzen. Hierbei wird über eine sogenannte Drehdurchführung der Hydraulikdruck von einem Gehäuse, in dem sich eine Druckquelle befindet, an die rotierende Sperrkupplung und den darin integrierten Druckkolben übergeben. Bei dieser Ausführungsform sind keine Axiallager notwendig. Bei der Verwendung eines solchen mitlaufenden Kolbens kann die Kupplungsanordnung als in sich geschlossenes System ausgebildet werden, das unter Verwendung klar definierter vorhandener Schnittstellen in ein Getriebe integriert werden kann. Die benötigte Drehdurchführung ist technisch jedoch sehr anspruchsvoll und in der Regel mit einer relativ hohen Leckagerate verbunden. Dies macht die Verwendung einer gemeinsamen Druckquelle bei Integration in ein vorhandenes Getriebe schwierig. Ferner ist die Kompensation auftretender Fliehkräfte in dem Druckkolben konstruktiv aufwändig und daher teuer.

Zur Betätigung solcher Kupplungsanordnungen ist es auch bekannt, Kugelrampensysteme ("ETM") zu verwenden. Bei diesen Kugelrampensystemen treibt ein Elektromotor über eine starke Übersetzung eine Kugelrampe an. Durch die Steigung in der Kugelbahn wird eine Axialkraft erzeugt, die ein Lamellenpaket zusammendrückt und hierdurch die Drehmomentübertragung ermöglicht.

Derartige Kugelrampensysteme können zwar axial sehr kurz ausgeführt werden, aufgrund der mechanischen Kraftübertragung muss der relativ große Elektromotor jedoch in unmittelbarer Nähe zum Kupplungssystem verbaut werden.

Ferner ist es bekannt, Kupplungsanordnungen über eine elektromagnetisch aktuierte Vorsteuerkupplung zu betätigen. Die Vorsteuerkupplung kann einen Abschnitt der Kugelrampe abbremsen, wodurch eine Relativdrehzahl in der Kugelrampe bewirkt wird. Hierdurch kann die Kugelrampe das eigentliche Kupplungspaket mit Kraft beaufschlagen und die Sperrwirkung erzeugen bzw. die Kupplung schließen.

Derartige Aktuatoranordnungen mit Kugelrampe und elektromagne-tisch betätigter Vorsteuerkupplung bauen jedoch axial sehr groß, was die Integration in Antriebsstränge schwierig macht.

Aus der US 6,374,976 B1 ist eine Kupplungsanordnung bekannt, bei der ein äußeres Drehglied drehbar an einen Gehäuse gelagert ist, wobei an dem Gehäuse eine Aktuatoranordnung angeordnet ist. Durch diese Aktuatoranordnung kann über eine Kupplungsanordnung das äußere Drehglied mit einem inneren Drehglied reibschlüssig verbunden werden.

Aus der US 2008/0214355 A1 ist eine Kupplungsanordnung bekannt, bei der ein Drehglied in einem Gehäuse angeordnet ist, wobei das Drehglied über eine Reiblamellenanordnung durch Reibschluss mit einer Eingangsachse drehfest verbunden werden kann. Eine Aktuatoranordnung um die Reiblamellenanordnung mit einer Druckkraft zu beaufschlagen, ist an dem Gehäuse angeordnet.

Aus der WO 2009/145676 A1 ist eine Getriebeanordnung bekannt, wobei die Getriebeanordnung in einem Gehäuse angeordnet ist. Die Getriebeanordnung weist drei Planetenräder auf. Durch die Kupplungsanordnung können jeweils zwei der drei drehbaren Elemente verbunden werden.

Vor diesem Hintergrund ist es eine Aufgabe der Erfindung, eine Kupplungsanordnung bereitzustellen, die gut in einem Fahrzeugantriebsstrang integriert werden kann und/oder die als geschlossenes System bzw. Modul ausgebildet werden kann.

Diese Aufgabe wird bei der eingangs genannten Kupplungsanordnung dadurch gelöst, dass zumindest das erste Aktuatorglied drehfest an dem Gehäuse festlegbar ist und sich von außerhalb des Drehgliedes in den Hohlraum hinein erstreckt.

Durch diese Maßnahme kann erreicht werden, dass die Reibkupplung als in sich geschlossenes Modul ausgebildet werden kann, so dass sich eine verbesserte Integrierbarkeit in Fahrzeugantriebsstränge ergibt.

Gemäß einer besonders bevorzugten Ausführungsform stützt sich das erste Aktuatorglied innerhalb des Hohlraumes über ein erstes Axiallager an dem Drehglied ab.

Bei dieser Ausführungsform ist zumindest das erste Aktuatorglied vorzugsweise axial verschieblich in Bezug auf das Gehäuse festlegbar.

Vorzugsweise weist das erste Aktuatorglied hierbei einen Längsabschnitt auf, der sich von dem Gehäuse aus in den Hohlraum hinein erstreckt, sowie einen Radialabschnitt, mittels dessen sich das erste Aktuatorglied innerhalb des Hohlraumes über das erste Axiallager an dem Drehglied abstützen kann.

Von besonderem Vorzug ist es ferner, wenn auch das zweite Aktuatorglied drehfest an dem Gehäuse festlegbar ist und sich von außerhalb des Drehgliedes in den Hohlraum hinein erstreckt.

Hierdurch kann die Aktuatorik konstruktiv einfach in den Hohlraum hinein verlagert werden, so dass sich ein geschlossenes Modul für die Kupplungsanordnung ergibt.

Das zweite Aktuatorglied ist in Bezug auf das Gehäuse vorzugsweise ebenfalls axial verschieblich gelagert (beispielsweise über eine Steckverzahnung oder dergleichen).

Ferner ist es bevorzugt, wenn das zweite Aktuatorglied über ein zweites Axiallager an der Reibkupplung angreift.

Auch das zweite Aktuatorglied weist vorzugsweise einen Längsabschnitt auf, der sich von dem Gehäuse aus in den Hohlraum hinein erstreckt, sowie einen Radialabschnitt, der über das zweite Axiallager an der Reibkupplung angreift.

Durch diese Maßnahme können innerhalb des Hohlraumes Axialkräfte auf die Kupplung aufgebracht werden.

Gemäß einer weiteren insgesamt bevorzugten Ausführungsform, die in Verbindung mit der eingangs genannten Kupplungsanordnung eine eigene Erfindung darstellt, ist innerhalb des Hohlraumes zwischen dem ersten und dem zweiten Aktuatorglied ein Druckraum ausgebildet, der über einen Fluidkanal mit einer gehäusefesten Fluidversorgungseinrichtung verbindbar ist, wobei der Fluidkanal in einem der Aktuatorglieder und/oder zwischen dem ersten Aktuatorglied und dem zweiten Aktuatorglied ausgebildet ist.

Hierdurch kann das Fluid von der gehäusefesten Fluidversorgungseinrichtung (die beispielsweise über Druckregeleinrichtungen etc. verfügt) in den Druckraum geleitet werden. Ferner kann die Aktuatoranordnung ohne Drehdurchführung realisiert werden. Das Fluid kann über das Gehäuse in das Innere des Hohlraumes zugeführt werden, wobei eine Abdichtung des ersten und/oder des zweiten Aktuatorgliedes gegenüber dem Gehäuse auf einfache Weise über Ringdichtungen wie O-Ring-Dichtungen oder dergleichen erfolgen kann.

Vorzugsweise ist zur Abdichtung des Druckraumes innerhalb des Hohlraumes zwischen dem ersten und dem zweiten Aktuatorglied eine Dichtung vorgesehen, die ebenfalls einfach als O-Ring-Dichtung oder dergleichen ausgebildet sein kann. Hierzu kann es auch vorteilhaft sein, wenn eines der Aktuatorglieder an dem freien Ende des Radialabschnittes einen weiteren Längsabschnitt aufweist, der den Radialabschnitt des anderen Aktuatorgliedes übergreift, wobei in diesem Bereich die Abdichtung vorgesehen sein kann.

Ferner ist es insgesamt vorteilhaft, wenn der Hohlraum gegenüber der Umgebung und/oder gegenüber der fluidischen Aktuatoranordnung abdichtbar ist. Bei dieser Ausführungsform kann das den Hohlraum bildende Drehglied die "Außenhülle" des geschlossenen Kupplungsanordnungsmoduls bilden, innerhalb derselben ein Druckraum der Aktuatoranordnung ausgebildet ist.

Da der Hohlraum auch gegenüber der fluidischen Aktuatoranordnung abgedichtet sein kann, ist es auch möglich, mittels der fluidischen Aktuatoranordnung eine trockene Reibkupplung zu betätigen, wobei die Kupplung vorzugsweise als nasslaufende Lamellenkupplung ausgebildet ist.

Generell ist es möglich, das erste oder das zweite Kupplungsglied starr mit dem Drehglied zu koppeln.

Besonders bevorzugt ist es jedoch, wenn das erste Kupplungsglied über eine Radsatzanordnung mit dem Drehglied gekoppelt ist.

Bei dieser Ausführungsform kann die Radsatzanordnung eine Übersetzung zwischen dem Drehglied und dem ersten Kupplungsglied einrichten. Ferner ist es möglich, die Radsatzanordnung als mechanisches Differential auszubilden, derart, dass die Kupplungsanordnung als Quer- oder Längssperre eines Drehmoment verteilenden Differentials eines Antriebsstrangs sein kann.

Demzufolge wird die obige Aufgabe ebenfalls gelöst durch ein sperrbares Differential mit einem Gehäuse und mit einer Kupplungsanordnung der erfindungsgemäßen Art, wobei das erste Kupplungsglied über eine Radsatzanordnung mit dem Drehglied gekoppelt ist, wobei die Radsatzanordnung eine Umlaufradsatzanordnung mit einem ersten Radsatzglied, einem zweiten Radsatzglied und mit einem dritten Radsatzglied ist, wobei das erste Radsatzglied mit dem einen Eingang des Differentials bildenden Drehglied verbunden ist, wobei das zweite und das dritte Radsatzglied Ausgänge des Differentials bilden und wobei das erste Kupplungsglied mit dem zweiten Radsatzglied verbunden ist, und wobei das zweite Kupplungsglied mit dem dritten Radsatzglied verbunden ist.

Ein derartiges sperrbares Differential lässt sich auf einfache Weise in dem Bauraum vorsehen, der beispielsweise bei Front-Quer-Getrieben für ein Differential ohnehin vorgesehen ist. Der Antrieb des sperrbaren Differentials kann erfolgen, indem das Drehglied, das vorliegend eine Art Differentialkorb bildet, mit einem Zahnrad verbunden ist, das mit dem Ausgang einer Antriebseinheit (beispielsweise Verbrennungsmotor und Drehzahlübersetzungsgetriebe) verbunden sein kann.

Bei dem sperrbaren Differential ist es generell möglich, dass die Kupplungsanordnung nach der Art einer Klauenkupplung ausgebildet ist.

Von besonderem Vorzug ist es jedoch, wenn die Kupplung eine Reibkupplung ist, insbesondere eine nasslaufende Lamellenkupplung.

In diesem Fall ist es ferner vorteilhaft, wenn das zweite Getriebeglied oder das zweite Radsatzglied mit dem Drehglied eine zusätzliche Reibpaarung bildet.

Hierdurch kann die zur Abstützung der Kupplungsanordnung an der dem Druckraum gegenüberliegenden axialen Seite erforderliche Kontaktfläche genutzt werden, um eine zusätzliche Reibpaarung zu bilden, so dass die Reibkupplung selbst kleiner dimensioniert werden kann und/oder der benötigte Aktivierungsdruck verringert werden kann und/oder ein weiteres Axiallager eingespart werden kann.

Insgesamt ist es erfindungsgemäß bevorzugt, wenn die Kupplungsanordnung der erfindungsgemäßen Art als Hang-On-Kupplung für einen Allrad-Antriebsstrang oder als Kupplung einer Doppelkupplungsanordnung eines Doppelkupplungsgetriebes oder als Kupplung einer Twin-Kupplungsanordnung zum Verteilen von Antriebsmoment auf angetriebene Räder einer angetriebenen Achse eines Kraftfahrzeuges verwendet wird.

Insgesamt lässt sich ferner je nach Ausführungsform wenigstens einer der folgenden Vorteile durch die Erfindung realisieren.

Zum einen kann eine stehende hydraulisch-aktuierbare Druckkolbenkonstruktion in einer rotierenden Kupplungsanordnung bereitgestellt werden, die vorzugsweise als Sperr-Kupplungsanordnung ausgebildet ist.

Es ergibt sich hierdurch ein geschlossenes Modul, das unter Verwendung vorhandener Schnittstellen ohne nennenswerten Änderungsaufwand in ein Fahrzeuggetriebe integriert werden kann. Die Druckübergabe an den Druckkolben befindet sich im Betrieb in einem statischen Zustand, was die Konstruktion einfach und kostengünstig hält. Eine Fliehkraftkompensation wird nicht benötigt. Die Druckübergabe kann beispielsweise in den Sitz eines Radialwellendichtringes an einem Differentialgehäuse eingebracht, insbesondere eingepresst werden. Bei dieser Ausführungsform sind die Änderungen am Getriebe minimierbar.

Bei Integration in ein Doppelkupplungsgetriebe kann die vorhandene Druckquelle des Getriebes verwendet werden, so dass lediglich ein zusätzliches Drucksteuer- bzw. Druckregelventil und gegebenenfalls ein Steuergerät erforderlich sind.

Es wird ein in sich geschlossenes Kupplungsanordnungs-System mit einer Leckagerate wie bei einem System mit stehendem Kolben ermöglicht. Die Kupplungsanordnungs-Konstruktion ist einfach, was Vorteile hinsichtlich der Entwicklungs- und Produktionskosten mit sich bringt. Die statischen Dichtungen im Bereich der Druckübergabe haben im Vergleich mit einer Drehdurchführung keinen Verschleiß über die Lebensdauer.

Ferner kann die statische Druckübergabe im Gehäuse des Getriebes vorgesehen werden, wodurch mindestens ein Bauteil entfällt.

Des Weiteren kann eine kompakte Bauweise realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Kupplungsanordnung gemäß einer Ausführungsform der vorliegenden Erfindung;
- Fig. 2: einen Antriebsstrang eines Kraftfahrzeuges mit einer Anfahrkupplung und einer Hang-On-Kupplung;
- Fig. 3: einen Antriebsstrang eines Kraftfahrzeuges mit einer Anfahrkupplung und zwei Kupplungen einer Twin-Kupplungsanordnung;
- Fig. 4: eine Längsschnittansicht durch eine Ausführungsform eines sperrbaren Differentials; und
- Fig. 5: eine schematische Längsschnittansicht durch eine Doppelkupplungsanordnung mit zwei erfindungsgemäßen Kupplungsanordnungen.

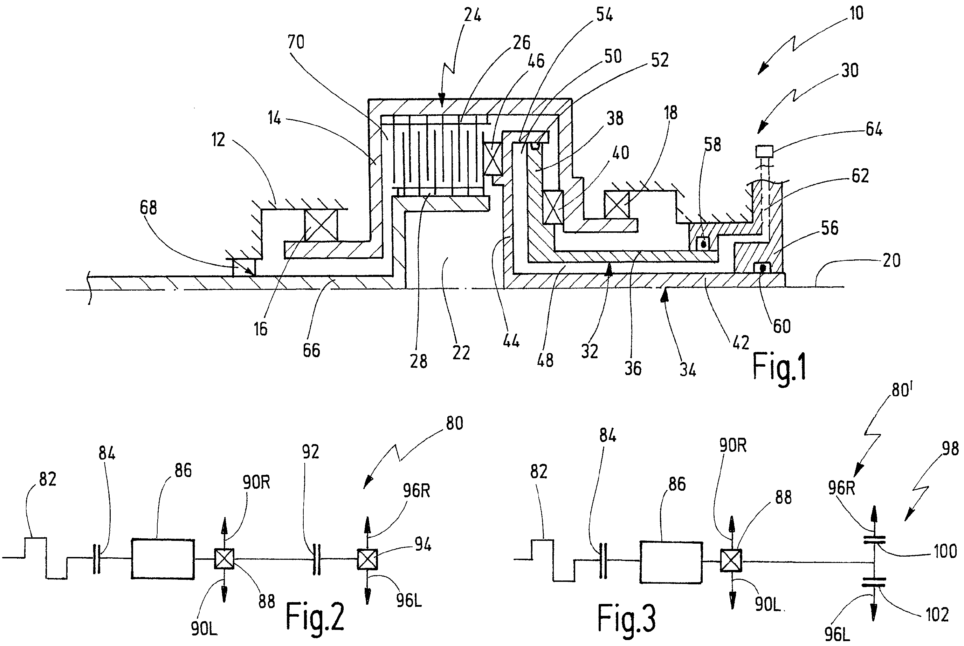

In Fig. 1 ist eine erste Ausführungsform einer erfindungsgemäßen Kupplungsanordnung schematisch im Längsschnitt dargestellt und generell mit 10 bezeichnet.

Die Kupplungsanordnung 10 weist ein Gehäuse 12 auf, das beispielsweise Teil eines Gehäuses eines Fahrzeuggetriebes sein kann, jedoch auch als eigenes Gehäuse ausgebildet sein kann.

Ferner beinhaltet die Kupplungsanordnung 10 ein Drehglied 14, das über ein erstes Radiallager 16 und über ein zweites Radiallager 18 drehbar an dem Gehäuse 12 gelagert ist. Alternativ ist auch eine Lagerung an einer Wellenanordnung denkbar. Das Drehglied 14 ist dabei um eine Längsachse 20 drehbar gelagert und ist korbartig ausgebildet, so dass von dem Drehglied 14 ein vorzugsweise rotationssymmetrischer Hohlraum 22 definiert wird.

Innerhalb des Hohlraumes 22 ist eine Kupplung 24 angeordnet, die vorzugsweise als nasslaufende Lamellenkupplung ausgebildet ist und ein erstes Kupplungsglied 26 und ein zweites Kupplungsglied 28 aufweist. Im vorliegenden Fall ist das erste Kupplungsglied 26 drehfest mit dem Drehglied 14 verbunden. Wie dargestellt, kann das Drehglied 14 dabei einen Außenlamellenträger bilden, an dem Lamellen des ersten Kupplungsgliedes 26 drehfest gelagert sind.

Das zweite Kupplungsglied 28 kann beispielsweise mit einer Ausgangswelle verbunden sein, worauf nachstehend noch eingegangen werden wird.

Die Kupplungsanordnung 10 beinhaltet ferner eine Aktuatoranordnung 30 in Form einer fluidischen Aktuatoranordnung. Die Aktuatoranordnung 30 beinhaltet ein erstes Aktuatorglied 32 und ein zweites Aktuatorglied 34. Das erste Aktuatorglied 32 weist einen ersten Längsabschnitt 36 auf, der sich in axialer Richtung von einem Abschnitt des Gehäuses 12 in den Hohlraum 22 hinein erstreckt. Ferner weist das erste Aktuatorglied 32 einen ersten Radialabschnitt auf, der mit dem ersten Längsabschnitt 36 verbunden ist und sich innerhalb des Hohlraumes 22 radial nach außen erstreckt. Der erste Radialabschnitt 38 ist dabei benachbart zu einem Radialabschnitt des Drehgliedes 14. Zwischen dem ersten Radialabschnitt 38 und dem Drehglied 14 ist ein erstes Axiallager 40 angeordnet, über das sich das erste Aktuatorglied 32 an dem Drehglied 14 axial abstützt. Der erste Längsabschnitt 36 des ersten Aktuatorgliedes 32 ist drehfest an dem Gehäuse 12 festgelegt, ist jedoch vorzugsweise verschieblich, insbesondere begrenzt verschieblich an dem Gehäuse 12 gelagert.

Das zweite Aktuatorglied 34 weist einen zweiten Längsabschnitt 42 und einen zweiten Radialabschnitt 44 auf. Der zweite Längsabschnitt 42 ist konzentrisch zu dem ersten Längsabschnitt 36 angeordnet, wobei der erste Längsabschnitt 36 als Hohlwellenabschnitt um den zweiten Längsabschnitt 42 herum vorgesehen sein kann.

Der zweite Längsabschnitt 42 ist ebenfalls drehfest mit dem Gehäuse 12 verbunden, jedoch vorzugsweise axial verschieblich hieran gelagert. Der zweite Längsabschnitt 42 erstreckt sich ebenfalls in den Hohlraum 22 hinein, derart, dass der zweite Radialabschnitt 44 in axialer Richtung zwischen dem ersten Radialabschnitt 38 und der Kupplung 24 angeordnet ist. Zwischen dem zweiten Radialabschnitt 44 und der Kupplung 24 ist ein zweites Axiallager 46 angeordnet, über das die Kupplung 24 betätigbar ist.

Zwischen dem ersten Längsabschnitt 36 und dem zweiten Längsabschnitt 42 ist ein Fluidkanal 48 ausgebildet, der mit einem Druckraum 50 fluidisch verbunden ist, der zwischen dem ersten Radialabschnitt 38 und dem zweiten Radialabschnitt 44 ausgebildet ist. Am radial äußeren Ende des ersten Radialabschnittes 38 ist ein dritter Längsabschnitt 54 ausgebildet, der den ersten Radialabschnitt 38 übergreift. Zwischen dem dritten Längsabschnitt 54 und dem ersten Radialabschnitt 38 ist eine erste Dichtung 52 angeordnet, die den Druckraum 50 abdichtet.

Das Gehäuse 12 weist einen Dichtungsblock 56 auf, wobei zwischen dem Dichtungsblock 56 und dem ersten Längsabschnitt 36 eine zweite Dichtung vorgesehen ist. Schließlich ist zwischen dem Dichtungsblock 56 und dem zweiten Längsabschnitt 42 eine dritte Dichtung 60 vorgesehen. Die Dichtungen 52, 58, 60 können jeweils als statische Dichtungen ausgebildet sein, beispielsweise in Form von Ringdichtungen wie O-Ring-Dichtungen.

In dem Dichtungsblock 56 ist eine Fluidbohrung 62 ausgebildet, die zwischen der zweiten Dichtung 58 und der dritten Dichtung 60 in den Fluidkanal 48 mündet und die mit einer schematisch angedeuteten Fluidversorgungseinrichtung 64 verbunden ist. Die Fluidversorgungseinrichtung 64 kann ein Fluid mit einem vorzugsweise geregelten Druck bereitstellen.

Der erste Längsabschnitt 36 ist vorliegend als Vollwellenabschnitt dargestellt, kann jedoch auch als Hohlwellenabschnitt ausgebildet sein.

Das zweite Kupplungsglied 28 bildet einen Innenlamellenträger, der über einen nicht näher bezeichneten Stegabschnitt oder dergleichen mit einer Ausgangswelle 66 der Kupplungsanordnung 10 verbunden ist. Die Ausgangswelle 66 erstreckt sich auf der der Aktuatoranordnung 30 axial gegenüberliegenden Seite des Drehgliedes 14 aus dem Hohlraum 22 heraus. Die Ausgangswelle 66 kann über eine Wellendichtung 68 gegenüber dem Gehäuse 12 abgedichtet sein.

Die Funktionsweise der Kupplungsanordnung 10 ergibt sich wie folgt. Die Kupplung 24 ist vorzugsweise eine normalerweise offene Reibkupplung, die dazu ausgelegt ist, das Drehglied 14 mit der Ausgangswelle 66 zu verbinden oder hiervon zu trennen. Das Drehglied 14 kann mittels einer nicht näher bezeichneten Antriebsordnung antreibbar sein. Im geöffneten Zustand der Kupplung 24 wird diese Drehbewegung im Wesentlichen nicht auf die Ausgangswelle 66 übertragen. Wenn die Kupplung 24 geschlossen ist, dreht die Ausgangswelle 66 mit dem Drehglied 14 mit. Die Eingangs- und Ausgangsfunktion von Drehglied 14 und Ausgangswelle 66 können auch vertauscht werden.

Zum Schließen der Kupplung 24 wird von der Fluidversorgungseinrichtung 64 ein Fluid unter Druck bereitgestellt, das über die Fluidbohrung 62 und den Fluidkanal 48 in den Druckraum 50 gelangt. Durch den sich in den Druckraum 50 aufbauenden Druck werden das erste Aktuatorglied 32 und das zweite Aktuatorglied 34 in Längsrichtung voneinander weg gedrückt. Das erste Aktuatorglied 32 stützt sich dabei über das erste Axiallager 40 an dem Drehglied 14 ab, dessen axiale Position vorzugsweise über ein nicht näher bezeichnetes Axiallager gesichert ist (diese Axiallagerfunktion kann auch durch das erste oder das zweite Radiallager 16, 18 bereitgestellt werden).

Durch den Druck in dem Druckraum 50 wird das zweite Aktuatorglied 34 auf die Kupplung 24 zu bewegt, so dass die Lamellen des ersten und des zweiten Kupplungsgliedes 26, 28 zusammengedrückt werden. Das Andrücken erfolgt dabei über das zweite Axiallager 46 (und gegebenenfalls ein weiteres Andruckelement).

Dabei kann ein sich gegebenenfalls einstellender Kontakt der Kupplung 24 und einer Radialwand des Drehgliedes 14 zur Einrichtung einer zusätzlichen Reibpaarung 70 verwendet werden. Mit anderen Worten kann das Lamellenpaket in axialer Richtung gegen die Innenwand des Drehgliedes 14 angedrückt werden, wobei sich ein Reibeingriff einstellt, der die Schließfunktion der Kupplung 24 unterstützt.

Zum Öffnen der Kupplung 24 wird der Druck in dem Druckraum 50 wieder abgebaut, so dass sich die Kupplung 24 öffnen kann. Die Kupplung 24 kann hierzu gegebenenfalls ein Federelement oder dergleichen aufweisen.

Das Fluid kann wie dargestellt über einen Fluidkanal 48 zwischen dem ersten Längsabschnitt 36 und dem zweiten Längsabschnitt 42 zugeführt werden. Alternativ kann der Fluidkanal 48 auch in dem ersten Längsabschnitt 36 oder in dem zweiten Längsabschnitt 42 ausgebildet sein. In einem der Längsabschnitte 36, 42 kann ferner ein weiterer Kanal ausgebildet sein, über den die Lamellenkupplung mit Fluid versorgt wird oder über den Fluid aus dem Hohlraum 22 abgeführt wird.

Eine Kupplungsanordnung 10 der in Fig. 1 beschriebenen Art lässt sich beispielsweise in Fahrzeugantriebssträngen verwenden. Ein Beispiel eines solchen Antriebsstranges ist in Fig. 2 schematisch dargestellt und mit 80 bezeichnet.

Der Antriebsstrang 80 weist einen Antriebsmotor in Form eines Verbrennungsmotors 82 sowie eine Anfahrkupplung 84 auf, die einen Ausgang des Antriebsmotors 82 mit einem Drehzahlübersetzungsgetriebe 86 verbindet. Ein Ausgang des Drehzahlübersetzungsgetriebes 86 ist mit einem ersten Differential 88 verbunden, das Antriebsleistung auf zwei angetriebene Räder 90L, 90R einer ersten angetriebenen Achse des Kraftfahrzeuges verteilt. Der Ausgang des Drehzahlübersetzungsgetriebes 86 ist bei dem Antriebsstrang 80 ferner über eine Hang-On-Kupplung 92 mit einem zweiten Differential 94 verbunden, das dazu ausgelegt ist, Antriebsleistung auf angetriebene Räder 96L, 96R einer zweiten angetriebenen Achse zu verteilen.

Die Kupplungsanordnung 10 der Fig. 1 lässt sich beispielsweise als Anfahrkupplung 84 und/oder als Hang-On-Kupplung 92 verwenden.

Fig. 3 zeigt eine weitere Ausführungsform eines Antriebsstranges 80', der hinsichtlich Aufbau und Funktionsweise generell dem Antriebsstrang 80 der Fig. 2 entspricht. Gleiche Elemente sind daher durch gleiche Bezugszeichen gekennzeichnet. Im Folgenden werden im Wesentlichen die Unterschiede erläutert.

Bei dem Antriebsstrang 80' der Fig. 3 ist anstelle des zweiten Differentials 94 eine Twin-Kupplungsanordnung 98 vorgesehen, die eine erste Seitenkupplung 100 und eine zweite Seitenkupplung 102 aufweist, deren Ausgänge mit den angetriebenen Rädern 96L, 96R verbunden sind. Die Kupplungsanordnung 10 der Fig. 1 lässt sich auch für jede der zwei Seitenkupplungen 100, 102 verwenden.

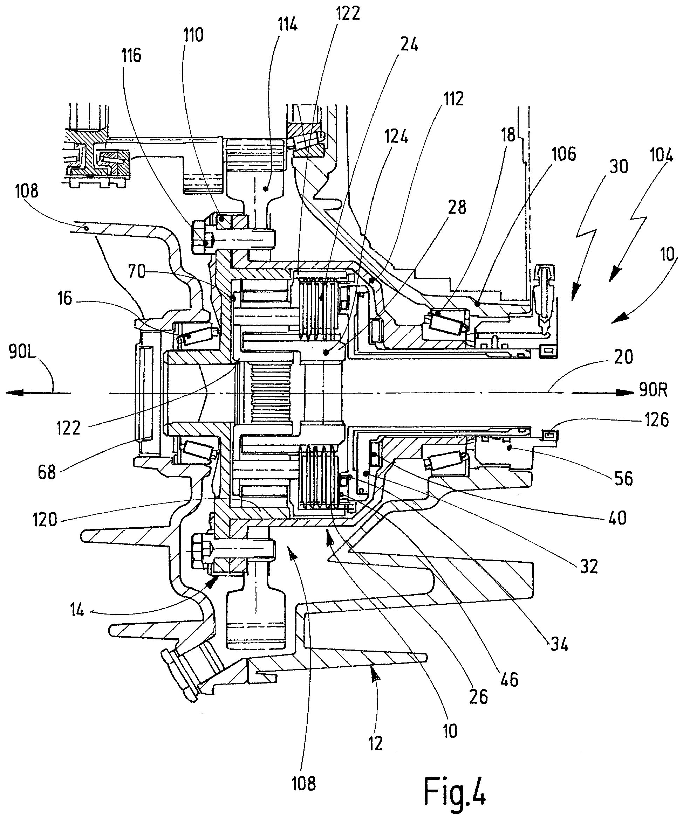

In Fig. 4 ist ein sperrbares Differential mit einer weiteren Ausführungsform einer Kupplungsanordnung 10 dargestellt, die hinsichtlich Aufbau und Funktionsweise der Kupplungsanordnung 10 der Fig. 1 entspricht. Gleiche Elemente sind daher durch gleiche Bezugszeichen gekennzeichnet. Im Folgenden werden im Wesentlichen die Unterschiede erläutert.

Das sperrbare Differential ist in Fig. 4 generell mit 104 bezeichnet. Das sperrbare Differential 104 ist beispielhaft für die Anbindung an eine Front-Quer-Antriebseinheit eines Kraftfahrzeuges ausgelegt und ist koaxial zu einer Längsachse 20 angeordnet, die eine angetriebene Achse für angetriebene Räder 90L, 90R darstellt. Das sperrbare Differential 104 ist mittels des ersten Radiallagers 16 an einem Hauptgehäuse 108 des Getriebes und mittels des zweiten Radiallagers 18 an einem Kupplungsgehäuse 106 drehbar gelagert. Das sperrbare Differential 104 weist ein erstes Differentialkorbteil 110 und ein zweites Differentialkorbteil 112 auf, die gemeinsam ein Drehglied 14 bilden, das einen in Fig. 4 nicht näher bezeichneten Hohlraum definiert. Die Differentialkorbteile 110, 112 sind starr miteinander und mit einem Tellerrad 114 verbunden, und zwar mittels einer Schraubverbindungsanordnung 116. Das Tellerrad 114 steht in Eingriff mit einem Abtriebsrad oder mit Abtriebsrädern des Getriebes.

In dem Hohlraum 22 des Drehgliedes 14 ist die Kupplung 24 angeordnet, die über das zweite Axiallager 46 mit dem zweiten Aktuatorglied 34 gekoppelt ist. An der der Aktuatoranordnung 30 abgewandten Seite der Kupplung 24 ist innerhalb des Hohlraumes 22 ein Planetenradsatz 108 aufgenommen. Der Planetenradsatz 118 weist ein Hohlrad 120 auf, das drehfest mit dem Drehglied 14 verbunden ist. Ferner beinhaltet der Planetenradsatz 118 einen Planetenträger 122, an dem eine Mehrzahl von Planeten drehbar gelagert ist. Der Planetenträger ist mit dem ersten Kupplungsglied 26 verbunden, das in der vorliegenden Ausführungsform nicht mit dem Drehglied 14 verbunden ist.

Ferner weist der Planetenradsatz 122 ein Sonnenrad in Form einer hohlen Sonnenwelle 124 auf, die mit dem zweiten Kupplungsglied 28 verbunden ist. Die hohle Sonnenradwelle 124 weist eine Innenverzahnung auf, über die eine Antriebswelle für das eine angetriebene Rad 90R drehfest mit der Sonnenradwelle 124 verbunden werden kann. Ferner weist der Planetenträger 122 einen Wellenabschnitt auf, der eine entsprechende Innenverzahnung zur Anbindung einer Antriebswelle für das andere angetriebene Rad 90L aufweist. Der Planetenradsatz 122 kann auch als Doppelplanetendifferential ausgeführt sein.

In Fig. 4 ist der Wellendichtring 68 zum Abdichten der Antriebswelle für das angetriebene Rad 90L schematisch dargestellt. Ferner ist in Fig. 4 eine Wellendichtung 126 zum Abdichten des Gehäuses 12 hin zu der Antriebswelle für das angetriebene Rad 90R dargestellt.

Wenn die Kupplung 24 geöffnet ist, wirkt der Planetenradsatz 118 als offenes Differential, bei dem die Antriebsleistung auf die angetriebenen Räder 90L, 90R nach der Art einer Drehmomentwaage verteilt wird, wie es im Stand der Technik bekannt ist. Wenn die Kupplung 24 ganz oder teilweise geschlossen wird, setzt eine mehr oder weniger große Sperrwirkung ein, durch die das Sonnenrad 124 und der Planetenträger 122 starr miteinander verbunden werden. Hierdurch wird eine Sperrwirkung erzeugt, da die Antriebsleistung zu gleichen Teilen auf die angetriebenen Räder übertragen wird bzw. bei den angetriebenen Rädern 90L, 90R das gleiche Antriebsmoment zugeteilt wird. Durch die Welle-Welle-Anordnung des Planetenradsatzes ist das Sperrmoment gleich dem doppelten Kupplungsmoment.

Dadurch, dass die Aktuatoranordnung in das Drehglied 14 integriert ist, ist das sperrbare Differential 104 als geschlossenes Modul ausgebildet, das auf einfache Weise zum einen an den Ausgang des Getriebes angebunden werden kann. Zum anderen kann der Druckraum 50 ohne Drehdurchführung und ohne Ausgleichsräume realisiert werden. Ferner ergibt sich eine einfache Anbindung an bereits existierende Gehäusekonstruktionen.

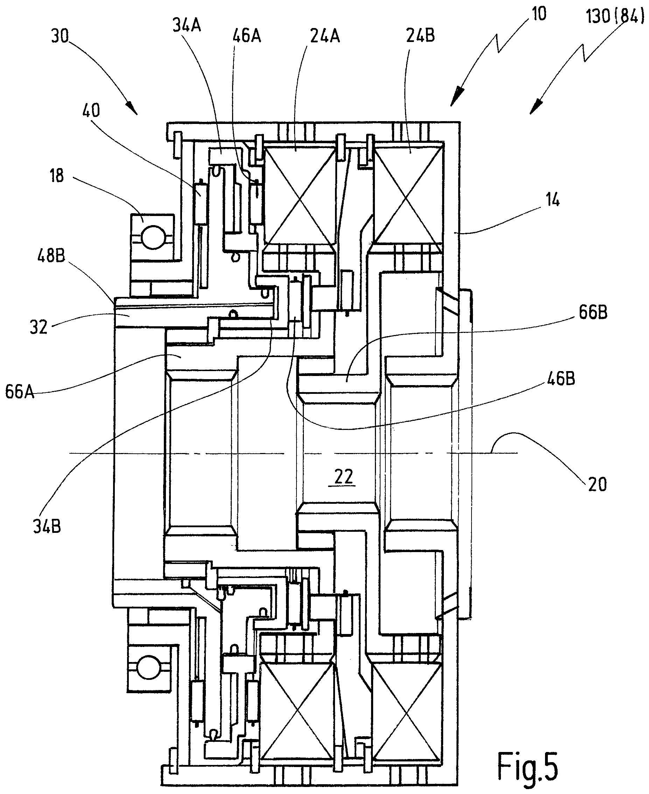

In Fig. 5 ist in schematischer Form eine Doppelkupplungsanordnung 130 dargestellt, die als Anfahrkupplungsanordnung zwischen einem Verbrennungsmotor und einem Stufengetriebe angeordnet werden kann. Die Doppelkupplungsanordnung 130 entspricht hinsichtlich Aufbau und Funktionsweise generell der Kupplungsanordnung 10 der Fig. 1. Gleiche Elemente sind daher durch gleiche Bezugszeichen gekennzeichnet. Im Folgenden werden im Wesentlichen die Unterschiede erläutert.

Das Drehglied 14 weist eine Aufnahme für eine Kurbelwelle auf und bildet folglich ein Antriebsglied der Doppelkupplungsanordnung 130. Auf der axial gegenüberliegenden Seite ist die Aktuatoranordnung 30 ausgebildet, die ein erstes Aktuatorglied 32 aufweist, das mit einem nicht dargestellten Gehäuse drehfest verbunden ist und sich in den Hohlraum 22 hinein erstreckt. Das erste Aktuatorglied 32 weist dabei einen Radialabschnitt auf, an dem mittels zweier nicht näher bezeichneter Dichtungen ein zweites Aktuatorglied 34A für eine erste Kupplung 24A der Doppelkupplungsanordnung 130 axial verschieblich gelagert ist. Ferner ist radial weiter innen liegend an dem ersten Aktuatorglied 32 ein weiteres zweites Aktuatorglied 34B für eine zweite Kupplung 24B axial verschieblich gelagert und mittels zweier nicht näher bezeichneter Dichtungen abgedichtet. Die zweiten Aktuatorglieder 34A, 34B wirken über jeweilige Axiallager 46A, 46B auf die Kupplungen 24a bzw. 24B, wobei zwischen dem zweiten Axiallager 46B und der zweiten Kupplung 24B ein Andruckglied angeordnet ist.

Die zwei Kupplungen 24A, 24B sind an ihrem Außenumfang jeweils drehfest mit dem Drehglied 14 verbunden. An ihrem Innenumfang sind die zwei Kupplungen 24A, 24B jeweils mit einer Ausgangswelle 66A, 66B verbunden, wobei die Ausgangswelle 66A zur Anbindung an eine Hohlwelle eines nachgeschalteten Doppelkupplungsgetriebes ausgebildet ist und wobei die Ausgangswelle 66B zur Anbindung an eine Innenwelle des nachgeschalteten Doppelkupplungsgetriebes ausgebildet ist.

## Patentansprüche

1. Kupplungsanordnung (10), insbesondere für einen Fahrzeugantriebsstrang (80), mit
- einem Drehglied (14), das an einem Gehäuse (12) um eine Längsachse (20) drehbar lagerbar ist und das einen Hohlraum (22) definiert;
- einer Kupplung (24), die ein erstes Kupplungsglied (26) und ein damit kuppelbares zweites Kupplungsglied (28) aufweist und die in dem Hohlraum (22) angeordnet ist, wobei das erste Kupplungsglied (26) oder das zweite Kupplungsglied (28) mit dem Drehglied (14) gekoppelt ist; und
- einer fluidischen Aktuatoranordnung (30), die ein erstes und ein zweites Aktuatorglied (32, 34) aufweist, die zum Betätigen der Kupplung (24) relativ zueinander beweglich sind, wobei zumindest das erste Aktuatorglied (32) drehfest an dem Gehäuse (12) festlegbar ist **dadurch gekennzeichnet, dass** das erste Aktuatorglied (32) sich von außerhalb des Drehgliedes (14) in den Hohlraum (22) hinein erstreckt,
wobei das erste Aktuatorglied (32) sich innerhalb des Hohlraumes (22) über ein erstes Axiallager (40) an dem Drehglied (14) abstützt.

2. Kupplungsanordnung nach Anspruch 1, **dadurch gekennzeichnet, dass** das zweite Aktuatorglied (34) über ein zweites Axiallager (46) an der Reibkupplung angreift.

3. Kupplungsanordnung nach einem der Ansprüche 1 oder 2, **dadurch gekennzeichnet, dass** innerhalb des Hohlraumes (22) zwischen dem ersten und dem zweiten Aktuatorglied (32, 34) ein Druckraum (50) ausgebildet ist, der über einen Fluidkanal (48) mit einer gehäusefesten Fluidversorgungseinrichtung (64) verbindbar ist, wobei der Fluidkanal (48) in einem der Aktuatorglieder (32) und/oder zwischen dem ersten Aktuatorglied (32) und dem zweiten Aktuatorglied (34) ausgebildet ist.

4. Kupplungsanordnung nach einem der Ansprüche 1 bis 3, **dadurch gekennzeichnet, dass** der Hohlraum (22) gegenüber der Umgebung und/oder gegenüber der fluidischen Aktuatoranordnung (30) abdichtbar ist.

5. Kupplungsanordnung nach einem der Ansprüche 1 bis 4, **dadurch gekennzeichnet, dass** das erste Kupplungsglied (26) über eine Radsatzanordnung (118) mit dem Drehglied (14) gekoppelt ist.

6. Sperrbares Differential (104) mit einem Gehäuse (12) und mit einer Kupplungsanordnung (10) nach Anspruch 5, wobei die Radsatzanordnung (118) eine Umlaufradsatzanordnung mit einem ersten Radsatzglied (120), einem zweiten Radsatzglied (122) und mit einem dritten Radsatzglied (124) ist, wobei das erste Radsatzglied (120) mit dem einen Eingang des Differentials (104) bildenden Drehglied (14) verbunden ist, wobei das zweite und das dritte Radsatzglied (122, 124) Ausgänge des Differentials (104) bilden und wobei das erste Kupplungsglied (26) mit dem zweiten Radsatzglied (122) und das zweite Kupplungsglied (28) mit dem dritten Radsatzglied (124) verbunden sind.

7. Sperrbares Differential nach Anspruch 6, wobei die Kupplung (10) eine Reibkupplung ist und wobei das zweite Kupplungsglied (28) oder das zweite Radsatzglied (122) mit dem Drehglied (14) eine zusätzliche Reibpaarung (70) bildet.

8. Verwendung einer Kupplungsanordnung (10) nach einem der Ansprüche 1 bis 5 als Hang-On-Kupplung (92) für einen Allrad-Antriebsstrang (80) oder als Kupplung (24A, 24B) einer Doppelkupplungsanordnung (130) eines Doppelkupplungsgetriebes oder als Kupplung (100, 102) einer Twin-Kupplungsanordnung (98) zum Verteilen von Antriebsmoment auf angetriebene Räder (96L, 96R) einer angetriebenen Achse eines Kraftfahrzeuges.

## Claims

1. Clutch arrangement (1 Q), in particular for a vehicle drive train (80), having
- a rotary element (14) which is mounted on a housing (12) so as to be rotatable about a longitudinal axis (20) and which defines a cavity (22);
- a clutch (24) which has a first clutch element (26) and a second clutch element (28) which can be coupled thereto, which clutch (24) is arranged in the cavity (22), wherein the first clutch element (26) or the second clutch element (28) is coupled to the rotary element (14); and
- a fluidic actuator arrangement (30) which has a first and a second actuator element (32, 34) which can move relative to one another in order to activate the clutch (24), wherein at least the first actuator element (32) can be secured in a rotationally fixed fashion to the housing (12),
**characterized in that** the first actuator element (32) extends from outside the rotary element (14) into the cavity (22), wherein the first actuator element (32) is supported on the rotary element (14) by means of a first axial bearing (40) inside the cavity (22).

2. Clutch arrangement according to Claim 1, **characterized in that** the second actuator element (34) acts on the friction clutch by means of a second axial bearing (46).

3. Clutch arrangement according to Claim 1 or 2, **characterized in that** a pressure space (50), which can be connected via a fluid duct (48) to a fluid supply device (64) which is fixed to the housing, is formed between the first and the second actuator element (32, 34) inside the cavity (22), wherein the fluid duct (48) is formed in one of the actuator elements (32) and/or between the first actuator element (32) and the second actuator element (34).

4. Clutch arrangement according to one of Claims 1 to 3, **characterized in that** the cavity (22) can be sealed with respect to the surroundings and/or with respect to the fluidic actuator arrangement (30).

5. Clutch arrangement according to one of Claims 1 to 4, **characterized in that** the first clutch element (26) is coupled to the rotary element (14) via a gear set arrangement (118).

6. Lockable differential (104) having a housing (12) and having a clutch arrangement (10) according to Claim 5, wherein the gear set arrangement (118) is a planetary gear set arrangement with a first gear set element (120), a second gear set element (120) and with a third gear set element (124), wherein the first gear set element (120) is connected to the rotary element (14) which forms an input of the differential (104), wherein the second and the third gear set element (122, 124) form outputs of the differential (104), and wherein the first clutch element (26) is connected to the second gear set element (122), and the second clutch element (28) is connected to the third gear set element (124).

7. Lockable differential according to Claim 6, wherein the clutch (10) is a friction clutch, and wherein the second clutch element (28) or the second gear set element (122) forms an additional friction pairing (70) with the rotary element (14).

8. Use of a clutch arrangement (10) according to one of Claims 1 to 5 as a hang-on clutch (92) for an all-wheel drive train (80) or as a clutch (24A, 24B) of a double clutch arrangement (130) of a double clutch transmission or as a clutch (100, 102) of a twin clutch arrangement (98) for distributing drive torque to driven wheels (96L, 96R) of a driven axle of a motor vehicle.

## Revendications

1. Agencement d'embrayage (10), en particulier pour une chaîne cinématique d'un véhicule (80), comprenant :
- un organe rotatif (14) qui est supporté sur un boîtier (12) de manière à pouvoir tourner autour d'un axe longitudinal (20) et qui définit une cavité (22) ;
- un embrayage (24) qui présente un premier organe d'embrayage (26) et un deuxième organe d'embrayage (28) pouvant être accouplé à celui-ci et qui est disposé dans la cavité (22), le premier organe d'embrayage (26) ou le deuxième organe d'embrayage (28) étant accouplé à l'organe rotatif (14) ; et
- un agencement d'actionneur fluidique (30) qui présente un premier et un deuxième organe d'actionneur (32, 34) qui peuvent être déplacés l'un par rapport à l'autre pour actionner l'embrayage (24), au moins le premier organe d'actionneur (32) pouvant être fixé de manière solidaire en rotation au boîtier (12),
**caractérisé en ce que** le premier organe d'actionneur (32) s'étend depuis l'extérieur de l'organe rotatif (14) à l'intérieur de la cavité (22),
le premier organe d'actionneur (32) s'appuyant à l'intérieur de la cavité (22) par le biais d'un premier palier axial (40) contre l'organe rotatif (14).

2. Agencement d'embrayage selon la revendication 1, **caractérisé en ce que** le deuxième organe d'actionneur (34) vient en prise avec l'embrayage à friction par le biais d'un deuxième palier axial (46).

3. Agencement d'embrayage selon l'une quelconque des revendications 1 ou 2, **caractérisé en ce qu'**à l'intérieur de la cavité (22) entre le premier et le deuxième organe d'actionneur (32, 34) est réalisé un espace de pression (50) qui peut être connecté par le biais d'un canal fluidique (48) à un dispositif d'alimentation en fluide fixé au boîtier (64), le canal fluidique (48) étant réalisé dans l'un des organes d'actionneur (32) et/ou entre le premier organe d'actionneur (32) et le deuxième organe d'actionneur (34).

4. Agencement d'embrayage selon l'une quelconque des revendications 1 à 3, **caractérisé en ce que** la cavité (22) peut être étanchéifiée vis-à-vis de l'environnement et/ou vis-à-vis de l'agencement d'actionneur fluidique (30).

5. Agencement d'embrayage selon l'une quelconque des revendications 1 à 4, **caractérisé en ce que** le premier organe d'embrayage (26) est accouplé à l'organe rotatif (14) par le biais d'un agencement de jeu de roues (118).

6. Différentiel pouvant être bloqué (104) avec un boîtier (12) et un agencement d'embrayage (10) selon la revendication 5, l'agencement de jeu de roues (118) étant un agencement de jeu de roues orbital avec un premier organe de jeu de roues (120), un deuxième organe de jeu de roues (122) et un troisième organe de jeu de roues (124), le premier organe de jeu de roues (120) étant connecté à l'organe rotatif (14) formant une entrée du différentiel (104), le deuxième et le troisième organe de jeu de roues (122, 124) formant des sorties du différentiel (104) et le premier organe d'embrayage (26) étant connecté au deuxième organe de jeu de roues (122) et le deuxième organe d'embrayage (28) étant connecté au troisième organe de jeu de roues (124).

7. Différentiel pouvant être bloqué selon la revendication 6, dans lequel l'embrayage (10) est un embrayage à friction et le deuxième organe d'embrayage (28) ou le deuxième organe de jeu de roues (122) forme avec l'organe rotatif (14) un couple frottant supplémentaire (70).

8. Utilisation d'un agencement d'embrayage (10) selon l'une quelconque des revendications 1 à 5 en tant qu'embrayage Hang-On (92) pour une chaîne cinématique toutes roues motrices (80) ou en tant qu'embrayage (24A, 24B) d'un agencement à double embrayage (130) d'une transmission à double embrayage ou en tant qu'embrayage (100, 102) d'un agencement à embrayages jumeaux (98) pour répartir le couple d'entraînement à des roues motrices (96L, 96R) d'un essieu moteur d'un véhicule automobile.
